# EUROPEAN PATENT APPLICATION

(11) **EP 2 211 201 A1**
(43) Date of publication of application: **28.07.2010**
(21) Application number: 10151467.7
(22) Date of filing: 22.01.2010
(51) Int. Cl.: G01S 13/90

(54) **Method and system for in-field positioning of measurement instruments**

(30) Priority: 23.01.2009 IT MI20090079
(71) Applicant: Ellegi S.r.l., 20122 Milano (IT)
(72) Inventor: Leva, Davide, 21100 Varese (IT); Rivolta, Carlo, 20035 Lissone (MB) (IT)
(74) Representative: Cicogna, Franco

(57) **Abstract**

A method for quickly and precisely on-field locating and relocating a measurement instrument arrangement, **characterized in that** said method comprises the steps of:
- assembling, in a laboratory, said instrument arrangement to an intermediate system thereby providing an instrument arrangement - intermediate system assembly;
- transporting said instrument arrangement - intermediate system assembly to an installation site;
- coupling said instrument arrangement - intermediate system assembly to a pedestal by firmly connecting said intermediate system to said pedestal;
- disconnecting, after use, said instrument arrangement from said intermediate system while leaving said intermediate system coupled to said pedestal; and
- on-field using again said instrument arrangement by removably reconnecting said instrument arrangement to said intermediate system.

## Description

### BACKGROUND OF THE INVENTION

The present invention relates to a method and system for on-field positioning radar interferometric instruments, in a very quick, simple and safe manner, and also for easily repositioning said instruments at a different time, while assuring the repeatability of the method with a required repositioning precision.

As is known, interferometric radar methods may be used for recovering position information contained in radar images, for different purposes, in particular for generating elevation digital models of the scene being seen and for measuring displacements of portions of the scene.

Independently from its particular application, the interferometric radar method is based on a quantitative comparing of two images of the same scene taken at positions and time moments which can either coincide or not, depending on the specific application.

Differential interferometry allows, through a comparing of the phases of two time separated acquisitions, to recover a quantitative information about a displacement of different scene portions along a vision line of antenna systems possibly occurred in an elapsed time period.

Even if this method or technique may be applied on pairs of images acquired according to slightly different vision angles, the optimum and mostly used arrangement in ground supported platform systems provides to precisely take the images at different times but always from the same position, with a null baseline.

Under such a condition, by performing a phase difference between the pixel corresponding in the two images and assuming that the dielectric contribution is a constant one and accordingly is nullified, then the topographic contribution to the phase variation, which depends on the image baseline, will be a null one, whereas the remaining value may be directly related to distance variations.

In this mode of operation, it is not possible to measure displacements of an order of the wavelength of the radiation being used, typically having centimetric to millimetric values, with an accuracy corresponding to a small fraction thereof, for example, in most common applications, with a precision and accuracy from 0.3 to 0.7 mm.

To advantageously exploit the above mentioned interferometric radar methods, it is necessary to meet a series of requirements which, in a real condition, are however difficult to be satisfied.

In fact, different error sources negatively affect the end result, both in a case in which this method is applied for deriving topographic information and in a case in which it is used for differential interferometric applications.

One of the main applications of differential interferometry is that of monitoring environmental risks and, in particular, all those phenomena involving a displacement of the earth.

Other applications of differential interferometry methods comprise an analysis and an observation of displacements and/or deformations of large size constructions, such as bridges, dams, buildings in general, infrastructures, historical monuments and digital models of ground or earth elevation for very limited but highly precise areas.

Radar interferometry methods may be carried out either by satellite, airborne or ground based sensors.

Thus, in monitoring displacements or movements, because of great limitations of satellite and airborne sensors and variability of the characteristics of these phenomena, great advantages are achieved by using ground based sensors, which preserve all the main advantages of a radar arrangement, such as a remote operation and a great independence from solar illumination conditions, while providing, in principle, a very great operational flexibility from a standpoint of the observation frequency, acquisition geometry, polarization and frequency, as well as quick and easy installation.

In differential interferometry application ground based sensors, in particular, it is technically very simple to provide a condition in which the acquisition may be precisely repeated from a same position.

If this feature is joined to the possibility of achieving millimetric observation frequencies, then the displacement measurement precision may usually be of a sub-millimetric order.

With respect to a proper locating of a suitable installation place, the main difficulties are encountered just at the installation steps, since such an installation must be necessarily performed on a stable support, by using specifically designed assembling features and methods to assure the possibility of always achieving a periodic relocating or a possible future repetition of the involved measurement operations.

With respect to this problem, it is conventionally known that, for assembling ground based radar sensors, it is necessary to use plate supports which are permanently affixed to related supporting pedestals, and which are usually machined by mechanical machining processes, to form therein seats and housings having such a size and geometrical features as to assure a reassembling of the sensors at the same starting positions within the limitations required by differential radar interferometric methods, that is with relocating errors less than 0.3 mm.

In general, calibrated holes are conventionally used for engaging therein corresponding pins for allowing the assembly to be properly relocated.

The machining on the field of mechanical components within the required precision range, however, is a very complex and difficult operation because of a lacking on site of suitable tools, such as column drilling devices.

In an article "Long Term Monitoring of Unstable Slopes by Ground Based Synthetic Aperture Radars: A case Study in Italy", by Noferini et al. (ESA-ESRIN Fringe ATSR Workshop 2005, Frascati, Italia, 02.12.2005 - XP007910217), a measurement system in which an interferometric radar instrument is relocated, in following measurement campaigns or procedures, performed by a mechanical template is disclosed.

In such a system, the instrument or tool and template must be disassembled and reassembled again by subsequent disassembling and reassembling procedures. In fact, without using such a template, it would not be possible, in a subsequent measurement procedure or campaign, to assemble and relocate the sensor on the plate, which, in turn, is left on the field.

This involves a very complex on-field machining, generally in places such as mountains, in open air and without dedicated manual instruments, with the exception of drilling, threading or honing devices which compel to achieve a tradeoff between the machining speed and precision, anyhow subjected to the skillness of the operator.

Actually, the above mentioned prior system provides to connect on the field three different elements, that is the fixed plate, the template and sensor, thereby making the related operation very complex, since the on-field coupling of the plate to the template must be very precise.

### SUMMARY OF THE INVENTION

Thus, the aim of the present invention is to provide an improved method and system for properly on-field locating an interferometric instrument arrangement.

According to one aspect of the present invention, the above object is achieved by a method according to claim 1, which method provides to use a system, according to claim 3, which can be easily installed, without requiring accurate and time consuming machining operations, and also allowing to easily adjust the flatness and alignment of a plurality of support elements, and to speed up any installation operations or steps, by using a system allowing to quickly and precisely relocate the instruments, at least within the precision limits required by the application, and without the need of using reference or adjusting instruments.

This system allows moreover to easily adjust the planar arrangement of the instruments and their mutual precise alignment jointly with their supports, an instrument being provided with a pedestal connecting interface not directly coupled to the pedestal or to other interfaces coupled to said pedestal.

In fact, according to the invention, between the instrument and pedestal and/or the interface thereof, an intermediate system is arranged, comprising connections both to the system interface and to the pedestal or interfaces of the latter, said intermediate system comprising one or more positioning or locating elements and a movable firm connection allowing said system to be easily and firmly connected to the instrument assembly interface.

The movable connection and locating elements therefor being made on a shop thereby assuring a perfect and repeatable coupling of the components.

The positioning is achieved by suitable geometrical configurations, such as cylindric, conic, parallelepiped, spherical, trapezoidal, star or cross, or slotted profile configurations.

The movable connection allows the components to be perfectly coupled and is carried out by using screws, rivets, 1/4 turn or 1/2 turn screws and so on.

The connection with the pedestal is achieved through connection means such as by screws or studs, or by weldment, and with a precision of some orders less than that with the intermediate system, which, according to the present invention, is disconnected from the pedestal and, accordingly, allows, by using spacer or shim elements, and/or height adjusters, such as studs, screws, bolts, scroll screws and so on, to adjust the planar arrangement of the instruments with respect to the pedestal, or to the support elements therefor.

In particular, the method provides to perform, in a laboratory, a connection between the instruments and intermediate system, bring the thus assembled instrument arrangement to the intermediate system on the field, and on field perform the connection of the instrument-intermediate system assembly and pedestal, by easily performing low precision machining operations, thereby providing firm but easily and quickly removable connections between the instrument and intermediate system, while the intermediate system is permanently left on the field, and any desired relocating being carried out by on-field re-connecting each time the instrument arrangement to the intermediate system.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative, but not limitative, example in the accompanying drawings, where:
Figure 1 is a block diagram showing an embodiment of the method for installing the instrument arrangement according to the present invention;
Figure 2 is a diagram, showing the connections between component interfaces according to the present invention;
   and
Figure 3 is a cross-sectional view of a possible embodiment of the inventive system as it is on-field installed.

### DESCRIPTION OF THE PREFERRED EMBODIMENTS

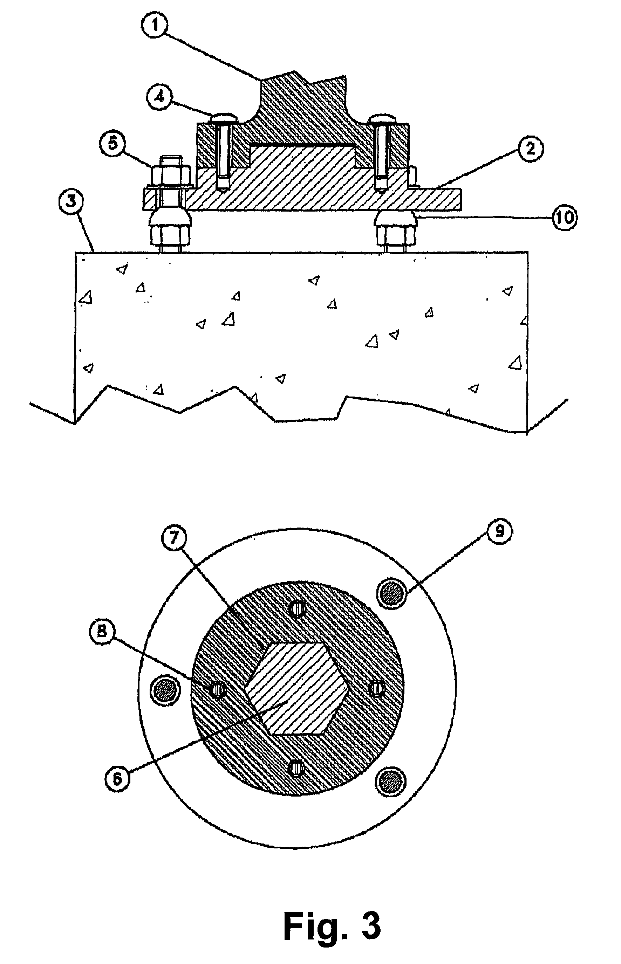

With reference to the number references of the above mentioned figures, the system according to the invention comprises a concrete pedestal 3, shown in figure 3, and stud elements 5 to be used as fixed connecting elements between the pedestal and an intermediate instrument arrangement; in this connection it should be pointed out that this same coupling principle could also be applied to pedestals of any desired materials and to connections of any desired types.

As shown in figure 3, the base of the instrument 1 is coupled to the intermediate system by coupling screws 4 providing movable connections.

The intermediate system supports the locating elements 6, of hexagonal shape, said element being so machined as to be perfectly plugged-in, with the required precision, into a recess having the same configuration, formed on the instrument base 1.

The base of said instrument 1 and said intermediate system 2 are then coupled in a laboratory by coupling screws 4 and from connections 6, 7, thereby providing a single assembly to be easily transported to the field, on which the concrete pedestal 3 is already formed, for installing thereon the instruments by using, for example, stud elements as it will be hereinafter disclosed.

The instrument 1 and intermediate system 2, coupled to one another, are arranged on the base and, by using the holes 9 formed on the intermediate system 2, and having a diameter larger than that of the studs 5 and performed in a very easy manner by machining operations carried out by conventional yard apparatus, such as a wall drilling devices, to also drill a plurality of further holes in the pedestal 3 at the holes 9 of the intermediate system 2, for receiving the bars or rods of the studs 5 to be fixed to the pedestal 3, with adjusting washers and nuts 10 being further used for forming bearing and centering points for the intermediate system 2.

Figure 3 shows adjusting washers and nuts 10 with a semi-spherical configuration, which, however, may also have any conical or flat configurations, adapted to form a bearing base at the holes 9 of the intermediate system 2 and the threaded bars of the pedestal 3 studs 5 to allow an easy installation with any desired mutual clearances.

Upon having adjusted the nuts of the studs 5 so as to perfectly align the instrument 1 or optional bases (provided in a number larger than one), for supporting the instrument, the nuts are finally locked by mechanical locking methods, for example by devices adapted to prevent the nuts and screws from disengaging, such as counter-nuts, recessed locking devices, tabs and pins, or by chemical methods (glue and cement materials) or chemical-physical methods (welding spots), thereby permanently clamping the intermediate system 2 to the pedestal 3, to in turn lock the instrument 1 and intermediate system 2 on the pedestal 3, to allow required measurements to be easily and precisely performed.

At the end of the measurements, the above removable connections will be disengaged by screwing off the screws 4, to quickly and easily remove the instrument 1 from the intermediate system 2 which, in turn, is permanently left clamped to the pedestal 3.

If it is necessary to repeat measurements, then the measurement instrument is brought again to its place and connected to the intermediate system 2 by screwing on again said screws, so as to perfectly align the elements 6 and 7, the overall measurement assembly within a target tolerance range, which operation, accordingly, requires only a locking again of the screws 4.

At the end of the measurement operations, the removable screws 4 are again released, thereby the instrument is again easily detached from the intermediate system 2, in turn left permanently connected in situ to the pedestal 3.

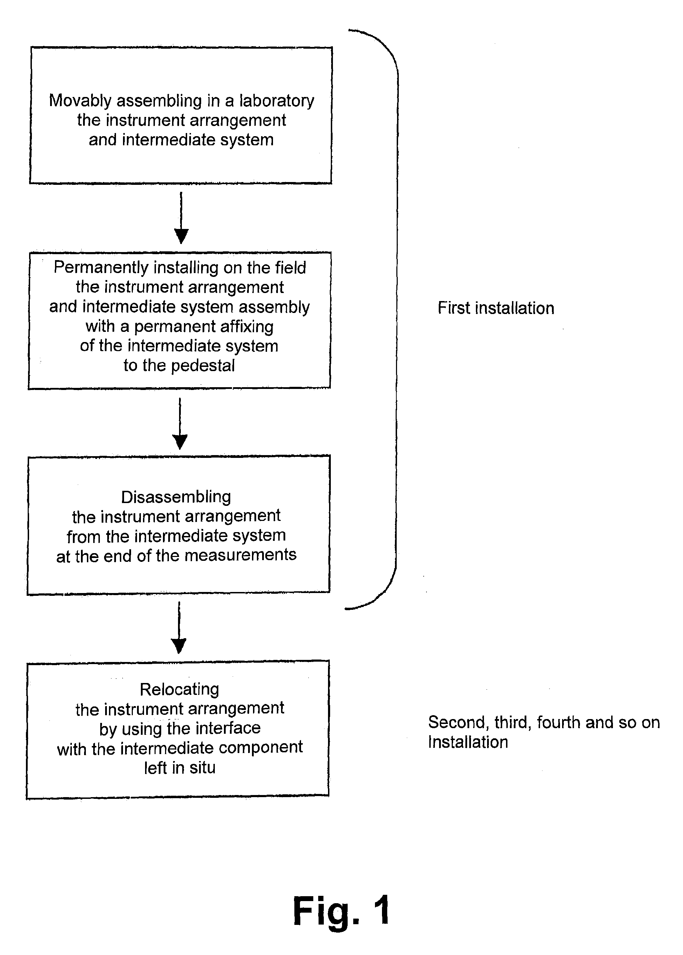

Figure 1 schematically shows a block diagram of the method for installing an instrument arrangement according to the present invention, herein disclosed with reference to the above illustrated embodiment.

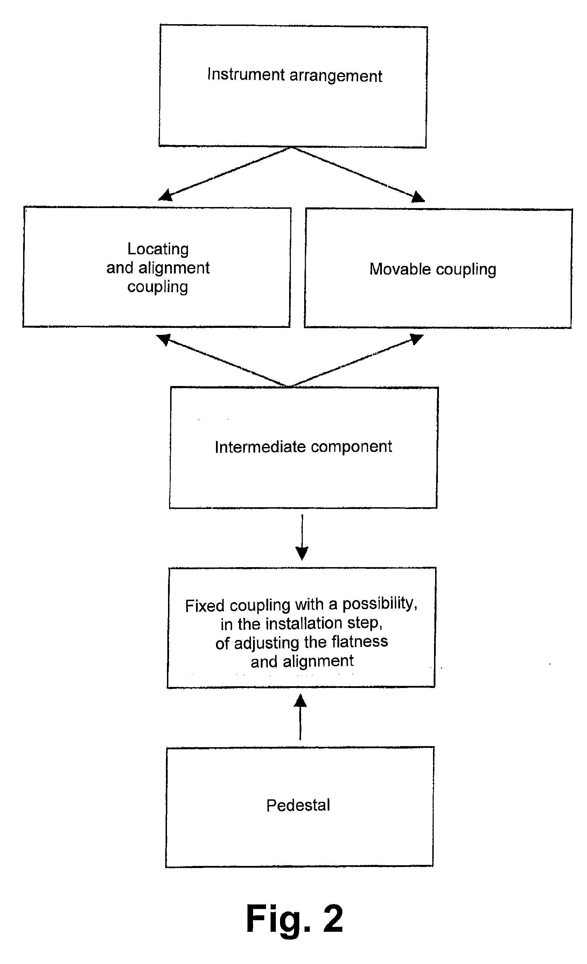

Figure 2 shows a connection diagram illustrating the couplings of the component interfaces according to the present invention, as disclosed according to the above illustrated embodiment.

It has been found that the invention fully achieves the intended aim and objects.

In fact, the invention has provided an improved method for quickly and easily on-field locating interferometric instrument assemblies, without the need of performing time consuming machining operations, while further allowing to easy adjust several supports to a flat and aligned assembled condition.

As stated, the method according to the present invention comprises a first step of performing, in a laboratory, a connection between a measurement instrument assembly and an intermediate system, on-field connect the thus assembled instrument to an intermediate system and further on-field connect the instrument-intermediate system assembly to a pedestal by performing easy and coarse coupling machining operations, while allowing the measurement instrument to be easily and quickly removed as necessary, and leaving the intermediate system permanently installed on the selected measurement place.

The measurement instrument assembly may be quickly relocated without the need of using reference or adjustment auxiliary elements, but using only a coupling system providing connections both to a system interface and to an intermediate pedestal interface, comprises one or more removable locating and coupling elements allowing to perform connections to the instrument assembly interface with a desired precision degree, said removable locating elements being made in a shop, by using suitable geometrical templates, thereby assuring a perfect and repeatable connection between the components.

The connection or coupling to the pedestal being carried out through fixed connections or weldments with a precision degree of an order less than that required for the intermediate system.

Moreover, the intermediate system according to the present invention may be easily disassembled from the pedestal, by using spacer or shim elements and height adjusters such us studs, screws, bolts, scroll screws and so on, to adjust the flatness of the instrument assembly with respect to its pedestal or to the supports therefor.

Thus, the system and method according to the present invention allow to quick and precisely on-field install interferometric radar instruments for monitoring millimetric displacements, for example on a mountain, with coarse tolerance machining operations, for example in a tolerance range of about 3-4 mm, while providing at the end of the assembling procedure, installation and relocating tolerances corresponding to a fraction of the used wave length, in particular less than 0.1 mm.

Up to now, on the contrary, prior instrument arrangements required an use on the field of drilling and pinning machining operations with a tolerance less than 0.1 mm which were achieved only by very slow and difficult machining operations.

In practicing the invention, the used materials, as well as the contingent size and shapes, can be any, according to requirements.

## Claims

1. A method for quickly and precisely on-field locating and relocating a measurement instrument arrangement, **characterized in that** said method comprises the steps of:
- assembling, in a laboratory, said instrument arrangement to an intermediate system thereby providing an instrument arrangement - intermediate system assembly;
- transporting said instrument arrangement - intermediate system assembly to an installation site;
- coupling said instrument arrangement - intermediate system assembly to a pedestal by firmly connecting said intermediate system to said pedestal;
- disconnecting, after use, said instrument arrangement from said intermediate system while leaving said intermediate system coupled to said pedestal; and
- on-field using again said instrument arrangement by removably reconnecting said instrument arrangement to said intermediate system.

2. A method, according to claim 1,
**characterized in that** in said coupling step the instrument arrangement - intermediate system assembling to the pedestal is performed by a sub-step of controlling a flatness of said instrument arrangement.

3. A system for on-field locating a measurement instrument arrangement, **characterized in that** said system comprises a pedestal adapted to be firmly fixed to a ground, an intermediate system coupled to said pedestal by fixed couplings, a measurement instrument arrangement removably coupled to said intermediate system by coupling elements, allowing said instrument arrangement to be disconnected from and reconnected again to said intermediate system for performing repeated measurement operations.

4. A system, according to claim 3,
**characterized in that** said fixed coupling between said pedestal and intermediate system are permanent couplings permanently connecting said pedestal and intermediate system.

5. A system, according to claim 3,
**characterized in that** said coupling elements between said instrument arrangement and intermediate system are removable couplings.

6. A system, according to claim 3,
**characterized in that** said intermediate system comprises a shaped locating element adapted to be simply plugged in, with a required precision degree, in a corresponding shaped recess formed in said instrument arrangement.

7. A system, according to claim 3,
**characterized in that** said pedestal is on-field made starting from any desired materials, said instrument arrangement and intermediate system being coupled to one another in a laboratory and transported to an installation place where said coupled instrument arrangement and intermediate system are arranged on said pedestal by using holes formed in said intermediate system and having a diameter larger than a diameter of coupling stud elements to allow to perform quick and easy machining operations by using conventional yard tools, such as a wall drill, and wherein, by using said wall drill, in said pedestal are formed a plurality of pedestal holes in correspondence with the holes in said intermediate system, and. upon having formed said pedestal holes stud element bars being coupled to said pedestal, upon having coupled said stud bar to said pedestal, adjusting washer and nuts being used for providing bearing and centering spots for said intermediate system thereby providing a bearing base at said intermediate system holes and said pedestal stud bars, with a high clearance, upon having adjusted the stud element nuts to provide a perfect leveling of said instrument arrangement, said nuts being fixedly locked thereby allowing said instrument arrangement to be used for performing measurements, at the end of said measurements, said screws being disconnected and said instrument arrangement being removed from said intermediate system, while said intermediate system is left permanently coupled to said pedestal, for repeating measurement operations, as necessary, in which repeated measurements said instrument arrangement is brought again to said place and coupled only to the intermediate system by shaped locating elements adapted to be simply plugged in into a corresponding shaped recess formed in said instrument arrangement and by locking screws.

8. A system, according to claim 3,
**characterized in that** said removable couplings and locating elements are made in a making shop thereby allowing a precise and repeatable connection of said instrument arrangement and intermediate system.
